# EUROPÄISCHE PATENTSCHRIFT

(11) **EP 0 310 173 B1**
(45) Veröffentlichungstag und Bekanntmachung des Hinweises auf die Patenterteilung: **16.06.1993**
(21) Anmeldenummer: 88202047.2
(22) Anmeldetag: 20.09.1988
(51) Int. Cl.: H04L 12/14, H04L 12/56

(54) **Schaltungsanordnung zur Vermeidung von Überlast in einem Breitband-Vermittlungssystem**
Circuit arrangement for avoiding overload in a broadband switching system
Circuit pour éviter la surcharge dans un système de commutation à large bande

(30) Priorität: 30.09.1987 DE 3732937
(43) Veröffentlichungstag der Anmeldung: 05.04.1989
(73) Patentinhaber: Philips Patentverwaltung GmbH, 22335 Hamburg (DE); Philips Electronics N.V., 5621 BA Eindhoven (NL)
(72) Erfinder: Kowalk, Wolfgang, Dr., D-8500 Nürnberg (DE)
(74) Vertreter: Peuckert, Hermann, Dipl.-Ing.

(56) Entgegenhaltungen:
- INTERNATIONAL SWITCHING SYMPOSIUM 1987, Phoenix, 15.-20. März 1987, Seiten 462-469, IEEE, New York, US; M. WM. BECKNER et al.: "A protocol and prototype for broadband subscriber access to ISDNs"

## Beschreibung

Die Erfindung bezieht sich auf eine Schaltungsanordnung zur Vermeidung von Überlast in einem Breitband-Vermittlungssystem, das zur Zerlegung einer Nachricht in Blöcke und zur Übertragung der Blöcke über breitbandige Übertragungswege nach einem asynchronen Zeitvielfachverfahren dient,
mit wenigstens einem in einem Vermittlungsknoten (VK) angeordneten Zähler, welcher zur Zählung der von einer Teilnehmereinrichtung (T) gesendeten Blöcken dient, und mit einem Schaltungsteil zum Erkennen einer überlast, wenn ein aus dem Zählerstand abgeleiteter Wert einen vorgegebenen Grenzwert überschreitet
Im Rahmen der Entwicklung zukünftiger, integrierter Breitbandnetze wird diskutiert, nach welchem Verfahren die digitale oder analoge Information - zum Teil mit hohem Bandbreitebedarf - in digitalen Netzen übertragen werden soll. Die Verfügbarkeit von Breitbandnetzen hängt von vielen Faktoren ab, unter anderem von der Normung, der kostengünstigen optischen Breitbandübertragung, von VLSI-Schaltkreisen für sehr hohe Verarbeitungsgeschwindigkeiten, sowie den Forderungen der Benutzer und Netzbetreiber. Die Konzeption solcher Breitbandnetze geht aus von dem kürzlich geschaffenen diensteintegrierten Fernmeldenetz ISDN.

Eine erste Möglichkeit zur Erweiterung des diensteintegrierten Fernmeldenetzes ISDN besteht in der Bereitstellung einer begrenzten Anzahl von Breitbandkanälen, wobei für jeden Breitbandkanal eine physikalische Verbindung hergestellt wird. Das dadurch geschaffene Netz mit Durchschaltevermittlung erfüllt jedoch nicht alle Anforderungen der Netzbetreiber an ein anpassungsfähiges Netz zur Übermittlung aller möglichen Dienste, darunter auch solche Dienste mit noch nicht international standardisierten Parametern, sowie für zukünftige Dienste.

In der europäischen Patentanmeldung mit der Veröffentlichungsnummer 0 183 592 wurde ein Breitband-Vermittlungssystem vorgeschlagen, bei dem die Nachricht in Blöcke (Cell) zerlegt und über breitbandige Übertragungswege nach einem asynchronen Zeitvielfachverfahren übertragen werden. Die Blöcke (Cell) können gleiche oder unterschiedliche Länge aufweisen. Die Blöcke bestehen aus Nutz- sowie aus Adressinformation, wobei die Adressinformation in einem sogenannten Nachrichtenkopf (Header) untergebracht ist. Die Anzahl der Bits eines Blocks wird als dessen Länge bezeichnet, wobei in den Standardisierungsvorschlägen hierfür Werte zwischen 120 und 256 Bits für die Nutzinformation und 32 oder 16 Bits für den Header vorgesehen sind. Die Zeitintervalle, in denen Blöcke übertragen werden, werden als Rahmen (Frames) bezeichnet. Dabei kann ein Rahmen einen gültigen Block enthalten oder leer sein. Zwischen zwei Teilnehmern des Breitband-Vermittlungssystems besteht eine "virtuelle Verbindung" (Connection), welche dadurch aufrechterhalten wird, daß die von den Teilnehmereinrichtungen abgesandten Blöcke mit eindeutigen Header-Kennungen versehen werden, die den Vermittlungsknoten das korrekte Weiterleiten der Blöcke gestatten. Die im Vermittlungsknoten ankommenden Blöcke von einer eingehenden Leitung werden unter Umsetzung des Headers auf eine ausgehende Leitung übertragen. Da während eines Rahmens zwei oder mehrere Blöcke für die gleiche Ausgangsleitung eintreffen können, müssen im Vermittlungsknoten sogenannte Wartepuffer vorgesehen werden. Im Wartepuffer werden einer oder mehrere dieser Blöcke solange zwischengespeichert, bis für diese ein freier Rahmen zur Verfügung steht.

Hinsichtlich der Pufferanordnung können die Vermittlungsknoten zentralgepufferte Systeme (wie beispielsweise aus der europäischen Patentanmeldung mit der Veröffentlichungsnummer 0 183 592 bekannt) oder dezentral gepufferte Systeme sein. Bei zentral gepufferten Systemen gibt es nur einen Puffer, in dem jede eingehende Leitung ihre ankommenden Blöcke ablegt und aus dem jede ausgehende Leitung für diese bestimmte Blöcke wieder ausliest. Systeme mit dezentraler Pufferung werden weiter dahingehend unterschieden, ob eine Pufferung von Blöcken ausschließlich auf der Eingangsseite (eine Ausführungsform hierfür ist beispielsweise in der nicht vorveröffentlichten Anmeldung EP-A- 0289087 beschrieben) erfolgt oder ob die Puffer ausschließlich vor den ausgehenden Leitungen (vgl. beispielsweise IEEE, Int. Switching Symp., Phoenix, March 1987, Seiten B 10.2.1 u. ff., "The Knockout Switch: A Simple, Modular Architecture for High-Performance Packet Switching" von Y.-S. Yeh et al) angeordnet sind oder ob es sich um Systeme mit Eingangs- und Ausgangspufferung handelt.

Zur Vermeidung von Überlast in Breitband-Vermittlungssystemen gleich welcher Pufferanordnung müssen entsprechende Einrichtungen in jedem Vermittlungsknoten vorgesehen werden. Aus einem Beitrag von J.S. Turner "New Directions in Communications" beim International Zürich Seminar on Digital Communications, March 1986, Seiten A 3.1 bis A 3.8, ist eine Schaltungsanordnung bekannt, bei der im Vermittlungsknoten ein Vorwärts-Rückwärts-Zähler angeordnet ist, welcher die von der Teilnehmereinrichtung gesendeten Blöcke zählt und welcher entsprechend der von der Teilnehmereinrichtung bestimmten Übertragungsgeschwindigkeit den Zählerstand zu bestimmten Zeitpunkten erniedrigt. Überschreitet der Vorwärts-Rückwärts-Zähler einen von der Teilnehmereinrichtung vorgebbaren Zählerstand, so erkennt der Vermittlungsknoten auf Überlast (leaky-bucket-Verfahren).

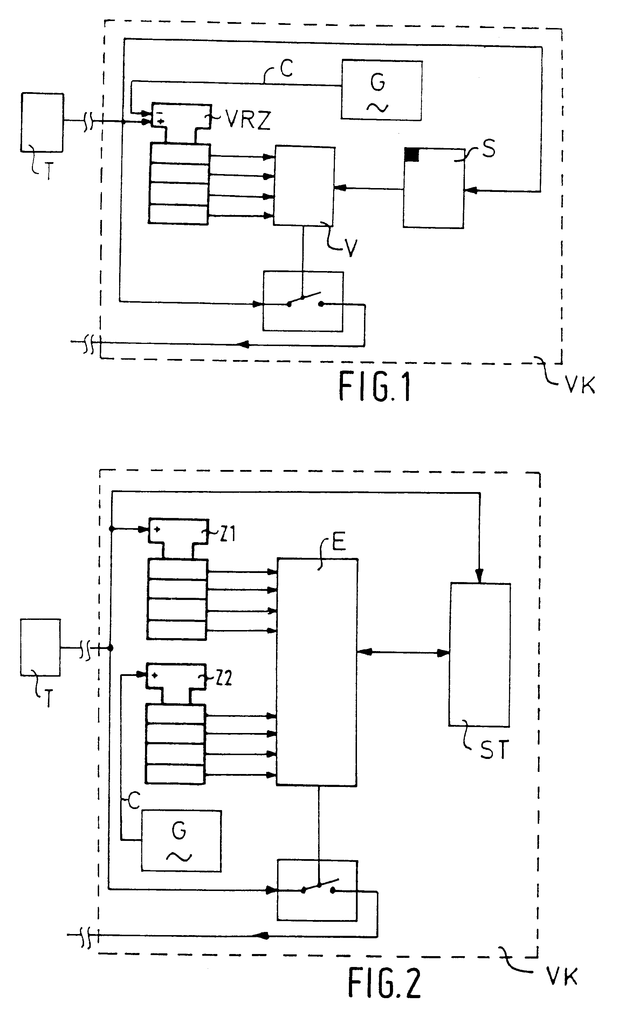

In Fig. 1 ist die dem vorgenannten leaky-bucket Verfahren zugrundeliegende Schaltungsanordnung dargestellt, soweit dies für das Verständnis der Erfindung erforderlich ist. Der Vorwärts-Rückwärts-Zähler VRZ zählt gemäß dem "leaky-bucket"-Verfahren mit jedem von der Teilnehmereinrichtung T kommenden Block vorwärts und zählt zu bestimmten Zeitpunkten (Takt C) rückwärts. Der Zählerstand des Vorwärts-Rückwärts-Zählers VRZ wird mittels eines Vergleichers V mit dem von der Teilnehmereinrichtung T vorbestimmten Zählerstand (wodurch die maximale Bitrate festgelegt wird) verglichen, welcher in einem im Vermittlungsknoten VK angeordneten Speicher S abgelegt ist.

Ist dieser im Speicher S abgespeicherte Zählerstand gleich 1, dann kann auf einfache Art und Weise die Einhaltung der maximal zugelassenen Bitrate überprüft werden. Ist der im Speicher S abgelegte Zählerstand größer 1 gewählt, so kann die Einhaltung eines vorgebbaren Mittelwerts für die Bitrate überprüft werden.

In einem Breitbandvermittlungssystem, bei dem auf den breitbandigen Übertragungswegen die Nachrichten nach dem asynchronen Zeitvielfachverfahren übertragen werden, ist es erforderlich zum Zwecke der Gebührenerfassung sowohl die Verbindungsdauer als auch die Anzahl der übertragenen Blöcke zu ermitteln.

Es sei noch erwähnt, daß aus dem Dokument "INTERNATIONAL SWITCHING SYMPOSIUM 1987, Phoenix, 15.-20. März 1987, Seiten 462-469, IEEE, New York, US; M. WM. Beckner et al.: A protocol and prototype for broadband subscriber access to ISDNs" ein Breitband-Vermittlungssystem bekannt ist (vgl. Kap. 3.3 und Fig. 8), bei dem ein "leaky-bucket"-Algorithmus verwendet wird, der die Zahl der Blöcke, die über einen Puffer laufen, begrenzt. Die Arbeitsweise dieses Algorithmus wird nicht beschrieben.

Der Erfindung liegt die Aufgabe zugrunde, eine Schaltungsanordnung zur Vermeidung von Überlast in einem Breitband-Vermittlungssystem derartig anzugeben, daß auf einfache Art und Weise sowohl Überlast vermieden als auch eine Gebührenerfassung vorgenommen werden kann.

Diese Aufgabe wird bei einer Schaltungsanordnung der eingangs genannten Art dadurch gelöst,
daß in dem Vermittlungsknoten für jede Teilnehmereinrichtung jeweils zwei Zähler angeordnet sind, wobei der erste Zähler zur Zählung der von der Teilnehmereinrichtung gesendeten Blöcke und der zweite Zähler zur Bestimmung der während der bestehenden Verbindung aufgelaufenen Verbindungszeit vorgesehen ist,
daß eine Einrichtung zur Bildung des Verhältnisses oder der Differenz der beiden Zählerstände vorgesehen ist und daß eine Steuerung zur periodischen Abfrage der Zählerstände und zum Erkennen einer Überlast aus den von der Einrichtung zu liefernden Werten vorgesehen ist.

Die Anordnung zweier Zähler in dem Vermittlungsknoten für jeweils eine Teilnehmereinrichtung bedeutet zunächst einen im Vergleich zur Schaltungsanordnung gemäß Tuner et al. erhöhten Schaltungsaufwand. Durch die erfindungsgemäße Schaltungsanordnung ist jedoch auf überraschend einfache Art und Weise eine Gebührenerfassung durchführbar. Eine Überlast wird weiterhin vermieden.

Als Einrichtung zur Bildung der Differenz der Zählerstände kann ein Komparator vorgesehen werden, durch den der Schaltungsaufwand verringert wird. Aus der Differenz der Zählerstände wird ein Kriterium für Überlast abgeleitet.

Weiterhin weist die erfindungsgemäße Schaltungsanordnung den Vorteil auf, daß auf überraschend einfache Art und Weise eine Ermittlung der Leitungsausnutzung während der Verbindungsdauer vorgenommen werden kann. Hierdurch wird dem Betreiber des Breitband-Vermittlungssystems ein Hilfsmittel zur Dimensionierung des Netzes zur Verfügung gestellt. Hierbei ist vorgesehen, daß zur Ermittlung der Leitungsausnutzung während der Verbindungsdauer die Steuerung über einen bestimmten Zeitraum zur Durchführung einer gleitenden Mittelwertbildung der von der Einrichtung gelieferten Werte vorgesehen ist.

Die Erfindung wird im folgenden anhand einer in der Zeichnung dargestellten Ausführungsform näher beschrieben und erläutert.

Es zeigt:
Fig. 1 eine nach den bekannten "leaky-bucket"-Verfahren ausgestaltete Schaltungsanordnung und
Fig. 2 die erfindungsgemäße Schaltungsanordnung.

Die nach dem bekannten "leaky-bucket"-Verfahren ausgestaltete Schaltungsanordnung ist bereits ausführlich beschrieben worden.

Mittels der in Fig. 2 dargestellten Schaltungsanordnung kann sowohl das Auftreten von Überlastsituationen zuverlässig vermieden, als auch auf überraschend einfache Art und Weise die Gebührenerfassung durchgeführt werden. Für jede Teilnehmereinrichtung T sind im Vermittlungsknoten VK jeweils zwei Vorwärtszähler Z1, Z2 angeordnet. Der erste Zähler Z1 zählt die von der Teilnehmereinrichtung T gesendeten Blöcke und mittels des zweiten Zählers Z2 wird die während der bestehenden Verbindung aufgelaufene Verbindungszeit bestimmt. Die beiden Zähler Z1, Z2 sind mit einer Einrichtung E zur Bildung des Verhältnisses der Zählerstände verbunden. Mittels der Einrichtung E in Verbindung mit einer Steuerung ST wird sowohl das Einhalten der mittleren als auch der maximalen Bitrate, welche durch die Teilnehmereinrichtung T bestimmt werden, überprüft.

Am Anfang der Verbindung sind beide Zählerstände von Z1, Z2 gleich Null. Der Zählerstand des zweiten Zählers Z2 ist bei Einhaltung der gewählten Bitraten kleiner oder höchstens gleich dem Zählerstand des ersten Zählers Z1. Das in der Einrichtung E gebildete Verhältnis von Zählerstand des ersten Zählers Z1 bezogen auf den Zählerstand des zweiten Zählers Z2 bedeutet eine Mittelwertbildung bezogen auf die maximale Bitrate. Überschreitet dieses Verhältnis einen vorgebbaren Grenzwert, so erkennt der Vermittlungsknoten VK (d.h. Steuerung ST), auf Überlast und bricht die aufgebaute Verbindung ab oder weist die von der Teilnehmereinrichtung T gesendeten Blöcke zurück oder ordnet die Verbindung einem anderen Dienst mit höherer Bitrate und damit verbundenen höheren Gebühren zu.

Durch Auswertung der Zählerstände ist auf überraschend einfache Art und Weise die Gebührenerfassung durchführbar, da während der bestehenden Verbindung der Zählerstand des ersten Zählers Z1 die von der Teilnehmereinrichtung T gesendeten Blöcke angibt und der Zählerstand des Zählers Z2 die aufgelaufene Verbindungszeit angibt. Die Zählerstände werden von der Steuerung ST in bestimmten Zeitabständen abgefragt und in einer in der Zeichnung nicht dargestellten Speicheranordnung gespeichert. Die Periodendauer der Abfrage ist dabei ein vom Breitband-Vermittlungssystem vorgegebener Systemparameter, d.h., die Vorgabe erfolgt im Hinblick auf die durch die Steuereinrichtung ST vorgenommene Überwachungsfunktion (policing function).

Wird für die Einrichtung E ein Komparator benutzt, so kann auf einfache Art und Weise der Schaltungsaufwand reduziert werden, wobei der Grenzwert zur Erkennung auf Überlast sich aus der festgestellten Differenz der beiden Zählerstände ergibt.

Neben der Gebührenerfassung kann auch auf überraschend einfache Art und Weise die Leitungsausnutzung während der Verbindungsdauer ermittelt werden, indem über einen Zeitraum hinweg eine gleitende Mittelwertbildung der in der Einrichtung E aufgelaufenen Meßwerte (Verhältnisse) durchgeführt wird. Anhand dieser Meßwerte kann dann die Dimensionierung des Netzes erfolgen.

## Patentansprüche

1. Schaltungsanordnung zur Vermeidung von Überlast in einem Breitband-Vermittlungssystem, das zur Zerlegung einer Nachricht in Blöcke und zur Übertragung der Blöcke über breitbandige Übertragungswege nach einem asynchronen Zeitvielfachverfahren dient,
mit wenigstens einem in einem Vermittlungsknoten (VK) angeordneten Zähler, welcher zur Zählung der von einer Teilnehmereinrichtung (T) gesendeten Blöcken dient, und mit einem Schaltungsteil zum Erkennen einer Überlast, wenn ein aus dem Zählerstand abgeleiteter Wert einen vorgegebenen Grenzwert überschreitet,
dadurch gekennzeichnet,
daß in dem Vermittlungsknoten (VK) für jede Teilnehmereinrichtung (T) jeweils zwei Zähler (Z1, Z2) angeordnet sind, wobei der erste Zähler (Z1) zur Zählung der von der Teilnehmereinrichtung (T) gesendeten Blöcke und der zweite Zähler (Z2) zur Bestimmung der während der bestehenden Verbindung aufgelaufenen Verbindungszeit vorgesehen ist, daß eine Einrichtung (E) zur Bildung des Verhältnisses oder der Differenz der beiden Zählerstände vorgesehen ist und daß eine Steuerung (ST) zur periodischen Abfrage der Zählerstände und zum Erkennen einer Überlast aus den von der Einrichtung (E) zu liefernden Werten vorgesehen ist.

2. Schaltungsanordnung nach Anspruch 1,
dadurch gekennzeichnet, daß als Einrichtung (E) ein Komparator vorgesehen ist, der zur Bildung der Differenz der beiden Zählerstände bestimmt ist.

3. Schaltungsanordnung nach Anspruch 1,
dadurch gekennzeichnet, daß zur Ermittlung der Leitungsausnutzung während der Verbindungsdauer die Steuerung (ST) über einen bestimmten Zeitraum zur Durchführung einer gleitenden Mittelwertbildung der von der Einrichtung (E) gelieferten Werte vorgesehen ist.

## Claims

1. Circuit arrangement for avoiding overload in a broadband switching system used for subdividing a message into message blocks and for transmitting the message blocks over broadband transmission paths in accordance with an asynchronous time division multiplex method, comprising at least a counter arranged in a switching node (VK) which counter is used for counting the message blocks transmitted by a subscriber station (T), and including a circuit component for recognizing overload when a value derived from the count exceeds a predetermined limit value, characterized in that the switching node (VK) for each subscriber station (T) comprises two counters (Z1, Z2), the first counter (Z1) being provided for counting the blocks transmitted by the subscriber station (T) and the second counter (Z2) being provided for determining the connection time accumulated during the existing connection, in that there is provided an arrangement (E) for forming the ratio or the difference between the two counts and in that there is provided a control (ST) for periodically scanning the counts and for recognizing overload on the basis of values to be supplied by the arrangement (E).

2. Circuit arrangement as claimed in Claim 1, characterized in that a comparator is provided as an arrangement (E) for forming the difference between the two counts.

3. Circuit arrangement as claimed in Claim 1, characterized in that for determining the utilization of the line during the connection the control (ST) is carried out over a specific period of time so that a moving average of the values supplied by the arrangement (E) is formed.

## Revendications

1. Montage de circuit permettant d'éviter la surcharge dans un système de commutation à bande large, qui sert à décomposer un message en blocs et à transmettre ces blocs via des voies de transmission à bande large selon un procédé multiplex asynchrone, comportant au moins un compteur installé dans un noeud de communication (VK) qui sert à compter les blocs envoyés par un dispositif d'abonné (T), et une partie de circuit pour identifier une surcharge lorsqu'une valeur dérivée de la position du compteur dépasse par excès une valeur limite prédéterminée, caractérisé en ce que dans le noeud de commutation (VK) pour chaque dispositif d'abonné (T) sont installés respectivement deux compteurs (Z1, Z2), le premier compteur (Z1) servant à compter les blocs envoyés par le dispositif d'abonné (T) et le second compteur (Z2) étant prévu pour déterminer la durée accumulée de la liaison constante, qu'un dispositif (E) est prévu pour former le rapport ou la différence des positions des deux compteurs et ce qu'enfin un contrôleur (ST) est utilisé pour consulter périodiquement les positions des compteurs et identifier une surcharge à partir des valeurs qui seront fournies par le dispositif (E).

2. Montage de circuit selon la revendication 1, caractérisé en ce qu'à titre de dispositif (E) est prévu un comparateur qui est destiné à former la différence des positions des deux compteurs.

3. Montage de circuit selon la revendication 1, caractérisé en ce, pour déterminer le taux d'exploitation des lignes au cours de la durée de la liaison, le dispositif contrôleur (ST) est conçu pour déterminer, sur un intervalle de temps déterminé, une valeur moyenne glissante des valeurs fournies par le dispositif (E).
